# EUROPÄISCHE PATENTSCHRIFT

(11) **EP 4 053 054 B1**
(45) Veröffentlichungstag und Bekanntmachung des Hinweises auf die Patenterteilung: **21.05.2025**
(21) Anmeldenummer: 22154783.9
(22) Anmeldetag: 02.02.2022
(51) Int. Cl.: B65G 57/03, B65G 1/137

(54) **VORRICHTUNG UND VERFAHREN ZUM KOMMISSIONIEREN VON LADEGUT**
DEVICE AND METHOD FOR PICKING LOADED MATERIAL
DISPOSITIF ET PROCÉDÉ DE PRÉPARATION DES COMMANDES DES MARCHANDISES DE CHARGEMENT

(30) Priorität: 02.03.2021 DE 102021202004
(43) Veröffentlichungstag der Anmeldung: 07.09.2022
(73) Patentinhaber: Winkel GmbH, 75428 Illingen (DE)
(72) Erfinder: Loupas, Athanasios, 75417 Mühlacker (DE); Weisser, Alexander, 75180 Pforzheim (DE); Bernhart, Jörg, 74321 Bietigheim-Bissingen (DE)
(74) Vertreter: Patentanwälte Ruff, Wilhelm, Beier, Dauster & Partner mbB

(56) Entgegenhaltungen:
- EP-A1- 0 487 837
- DE-A1- 102018 203 336
- US-A- 4 708 564
- US-A1- 2009 289 411

## Beschreibung

Die Erfindung betrifft eine Vorrichtung zum Kommissionieren von Ladegut mit einem Kommissionierschacht, mit einer in den Kommissionierschacht einfahrbaren und aus dem Kommissionierschacht ausfahrbaren Zunge zum Beladen mit Ladegut und mit Abstreifmitteln, die beim Ausfahren der Zunge aus dem Kommissionierschacht Ladegut von der Oberseite der Zunge auf einen Ladegutträger abstreifen. Die Erfindung betrifft auch ein Verfahren zum Kommissionieren von Ladegut, wobei das Ladegut auf eine in einem Kommissionierschacht angeordnete Zunge kommissioniert wird, die in den Kommissionierschacht einfahrbar und aus dem Kommissionierschacht ausfahrbar ist, und wobei das auf der Zunge befindliche Ladegut beim Ausfahren der Zunge aus dem Kommissionierschacht mittels Abstreifmitteln auf einen Ladegutträger abgestreift wird.

Aus der deutschen Offenlegungsschrift DE 10 2018 203 336 A1 sind eine Vorrichtung und ein Verfahren zum Kommissionieren von Ladegut in Rollbehälter bekannt, wobei eine in einen Kommissionierschacht einfahrbare und aus dem Kommissionierschacht ausfahrbare Zunge zum Beladen mit Ladegut vorgesehen ist und wobei Abstreifmittel vorgesehen sind, die beim Ausfahren der Zunge aus dem Kommissionierschacht Ladegut von der Oberseite der Zunge auf einen Rollbehälter abstreifen.

Aus der europäischen Offenlegungsschrift EP 0 487 837 A1 ist eine Vorrichtung zum Kommissionieren von Ladegut bekannt, bei der mehrere, eine Gabel bildende Zinken in einen Kommissionierschacht von der Seite her eingefahren werden können. Das vordere Ende der Zinken ist abgeschrägt, so dass die Zinken im Bereich ihres Endes ihre Dicke verringern.

Aus der US-Offenlegungsschrift US 2009/0289411 A1 ist eine Anordnung zum Stapeln von Druckprodukten bekannt. Die Produkte werden auf einer Zunge zwischengestapelt, die schräg nach oben ausgerichtet ist. Die Dicke der Zunge verringert sich zu ihrem Ende hin. US 2009/289411 A1 offenbart die Merkmale der Oberbegriffe der Ansprüche 1 und 4.

Aus der US-Patentschrift US 4,708,564 ist eine Vorrichtung zum Kommissionieren auf Paletten mit einem Kommissionierschacht bekannt. Ladegut in Form von Säcken wird auf einem Tisch gestapelt und dieser Tisch wird dann oberhalb einer Palette unterhalb des Stapels an Säcken herausgezogen, um die Palette mit einem Sackstapel zu beladen. Der Tisch kann schräg gestellt werden, so dass die Säcke auf dem Tisch gegen einen Anschlag rutschen.

Mit der Erfindung sollen eine Vorrichtung und ein Verfahren zum Kommissionieren von Ladegut verbessert werden.

Erfindungsgemäß sind hierzu eine Vorrichtung mit den Merkmalen von Anspruch 1 und ein Verfahren mit den Merkmalen von Anspruch 4 vorgesehen. Vorteilhafte Weiterbildungen der Erfindung sind in den Unteransprüchen angegeben.

Bei einer Vorrichtung zum Kommissionieren von Ladegut mit einem Kommissionierschacht, mit einer in den Kommissionierschacht einfahrbaren und aus dem Kommissionierschacht ausfahrbaren Zunge zum Beladen mit Ladegut und mit Abstreifmitteln, die beim Ausfahren der Zunge aus dem Kommissionierschacht Ladegut von der Oberseite der Zunge auf einen Ladegutträger abstreifen, ist vorgesehen, dass Mittel zum Anheben eines freien, in Einfahrrichtung der Zunge vorderen Endes der Zunge in Richtung auf ein oberes Ende des Kommissionierschachts beinhaltet sind und/oder dass die Zunge, im vollständig in den Kommissionierschacht eingefahrenen und unbeladenen Zustand, wenigstens abschnittsweise schräg in Richtung auf ein oberes Ende des Kommissionierschachts zu angeordnet ist.

Die Zunge sollte, in Höhenrichtung parallel zur Mittellängsachse des Kommissionierschachts gesehen, also möglichst flach sein, damit beim Abstreifen von Ladegut von der Zunge auf den Ladegutträger das Ladegut bis zur Oberfläche des Ladegutträgers nur einen geringen Höhenunterschied überwinden muss. Je flacher die Zunge ausgebildet ist, desto geringer ist dieser Höhenunterschied und desto problemloser ist es, das Ladegut beim Abstreifen von der Zunge korrekt auf dem Ladegutträger zu positionieren. Dies gilt vor allem dann, wenn mehrere gestapelte Lagen an Ladegut auf der Zunge angeordnet sind und dann gemeinsam auf den Ladegutträger abgestreift werden sollen. Beim Beladen von Paletten können beispielsweise Ladegutstapel von erheblicher Höhe, speziell mehr als 1 m Höhe, auf der Zunge gestapelt sein und müssen dann gemeinsam auf die Oberfläche der Palette abgestreift werden. Vor allem bei schwerem Ladegut, das auf das freie Ende der Zunge abgesetzt wird, kommt es zu einer erheblichen Durchbiegung der Zunge. In der Folge wird das Ladegut oder der Ladegutstapel beim Abstreifen schräg auf die Oberfläche des Ladegutträgers aufgesetzt. Dies kann dazu führen, dass die Ladegutstapel auf dem Ladegutträger nicht mehr korrekt angeordnet sind. Eine Versteifung der Zunge hat dabei ihre Grenzen, da die Zunge ja möglichst dünn oder flach sein soll, um den Höhenunterschied, den das Ladegut von der Oberseite der Zunge auf die Oberfläche des Ladegutträgers beim Abstreifen überwindet, möglichst gering zu halten. Durch die Erfinder wurde erkannt, dass eine erhebliche Verbesserung erzielt werden kann, wenn das freie, in Einfahrrichtung der Zunge vordere Ende der Zunge in Richtung auf ein oberes Ende des Kommissionierschachts angehoben wird. Alternativ oder zusätzlich kann die Zunge, im vollständig in den Kommissionierschacht eingefahrenen und unbeladenen Zustand, wenigstens abschnittsweise schräg in Richtung auf ein oberes Ende des Kommissionierschachts zu angeordnet sein. Durch diese Maßnahmen wird die zwangsläufige Biegung der Zunge beim Beladen mit Ladegut über die Länge der Zunge vermittelt. Eine im unbeladenen Zustand im Kommissionierschacht oder in Verlängerung des Kommissionierschachts im Wesentlichen horizontal angeordnete Zunge stellt einen Kragträger dar und biegt sich beim Beladen mit Ladegut an ihrem freien Ende nach unten. Wenn nun die Zunge von vornherein schräg auf ein oberes Ende des Kommissionierschachts zu angeordnet ist, führt das Aufsetzen von Ladegut auf die Zunge zwar auch zu einer Biegung der Zunge, die Abweichung von der horizontalen Lage im beladenen Zustand ist am freien Ende der Zunge aber wesentlich geringer als bei einer horizontalen Ausgangslage der unbeladenen Zunge. Alternativ oder zusätzlich kann das freie, in Einfahrrichtung der Zunge vordere Ende der Zunge in Richtung auf ein oberes Ende des Kommissionierschachts durch geeignete Mittel zu Anheben angehoben werden. Dies kann beispielsweise dadurch geschehen, dass die Zunge über den Großteil des Einfahrwegs horizontal in den Kommissionierschacht eingefahren wird und dann auf den letzten Millimetern des Einfahrwegs angehoben wird, speziell dass das freie, in Einfahrrichtung der Zunge vordere Ende der Zunge in Richtung auf ein oberes Ende des Kommissionierschachts angehoben wird. Der Erfindung liegt somit die Erkenntnis zugrunde, dass eine Biegung der Zunge beim Beladen mit Ladegut zwangsläufig akzeptiert werden muss, dass die schädlichen Auswirkungen der Biegung der Zunge, nämlich die große Auslenkung nach unten am freien Ende der Zunge, aber dadurch teilweise kompensiert werden können, dass das freie Ende der Zunge angehoben wird und/oder die Zunge im unbeladenen Zustand wenigstens abschnittsweise schräg in Richtung auf ein oberes Ende des Kommissionierschachts zu angeordnet wird. Über die gesamte Fläche der Zunge, auf die Ladegut aufgesetzt wird, kann dadurch erreicht werden, dass die Abweichung der Position der Oberfläche der Zunge von der idealen horizontalen Lage so gering ist, dass auch hohe Ladegutstapel problemlos auf die Oberfläche eines Ladegutträgers abgestreift werden können. Als Kommissionierschacht wird dabei ein Raum zwischen den Seitenwänden des Kommissionierschachts und innerhalb einer gedachten Verlängerung der Seitenwände von einer Brüstung, die das obere Ende des Kommissionierschachts bildet, bis zu einer Oberfläche des Ladegutträgers angesehen.

In Weiterbildung der Erfindung weisen die Mittel zum Anheben eine Einrichtung zum Positionieren wenigstens eines Anfangsabschnitts der Zunge, der beim Einfahren zuletzt im Kommissionierschacht angeordnet wird, schräg zu einer Mittellängsachse des Kommissionierschachts in Richtung auf ein oberes Endes des Kommissionierschachts zu im nicht beladenen und vollständig in den Kommissionierschacht eingefahrenen Zustand der Zunge auf.

Eine Biegung der Zunge beim Beladen kann durch schräges Anordnen des Anfangsabschnitts der Zunge ausgeglichen werden und speziell kann die Auslenkung der Biegung über die Länge der Zunge in Einfahrrichtung vermittelt oder ausgemittelt werden. Das freie Ende der Zunge wird durch das schräge Positionieren des Anfangsabschnitts der Zunge im unbeladenen Zustand ein Stück angehoben. Dadurch wirkt sich die Biegung der Zunge beim Beladen über die Länge der Zunge gesehen nicht so stark aus, beispielsweise wirkt sich die Biegung nur halb so stark aus. Ebenso könnte ein Absenken des freien Endes der Zunge im vollständig beladenen Zustand der Zunge um 1 cm gegenüber einer idealen horizontalen Position der Zunge akzeptiert werden. Auch bei einer solchen Durchbiegung ist es noch möglich, auch hohe Ladegutstapel sicher und ohne die Gefahr des Verrutschens auf der Oberfläche eines Ladegutträgers abzusetzen. Es ist darüber hinaus möglich, zu vermeiden, dass die Zunge auf dem Ladegutträger aufliegt und diesen während des Zurückziehens oder Ausfahrens aus dem Kommissionierschacht verschiebt.

Gemäß der Erfindung weisen die Mittel zum Anheben eine Führungsbahn auf.

Beispielsweise ist die Zunge an einem Rollenwagen oder einem Schlitten befestigt, der wiederum in einer Führungsbahn läuft, oder die Zunge kann unmittelbar in eine Führungsbahn eingreifen.

Gemäß der Erfindung ist die Zunge an einem Rollenwagen befestigt, wobei der Rollenwagen beim Einfahren der Zunge in den Kommissionierschacht und beim Ausfahren der Zunge aus dem Kommissionierschacht sich entlang der Führungsbahn bewegt.

Mittels eines Rollenwagens oder eines Schlittens, der sich entlang einer Führungsbahn bewegt, ist eine leichtgängige und sichere Führung der Zunge möglich. Die Führungsbahn kann dabei sowohl eine untere Führungsbahn als auch eine obere Führungsbahn aufweisen, wobei die obere Führungsbahn dann das Abkippen der Zunge beim Beladen verhindert. Mit anderen Worten wird der Rollenwagen oder der Schlitten im vollständig eingefahrenen Zustand und auch beim Ausfahren sowohl nach unten als auch nach oben eng geführt, so dass ein auf der Zunge befindlicher Ladegutstapel sicher auf die Oberfläche eines Ladegutträgers abgestreift werden kann. Im vollständig eingefahrenen Zustand ist die Zunge im Kommissionierschacht oder innerhalb einer gedachten Verlängerung des Kommissionierschachts angeordnet. Im vollständig ausgefahrenen Zustand ist die Zunge außerhalb des Kommissionierschachts oder außerhalb einer gedachten Verlängerung des Kommissionierschachts angeordnet.

In Weiterbildung der Erfindung verläuft ein Abschnitt der Führungsbahn schräg zu einer Einfahrrichtung der Zunge und in Richtung auf ein oberes Ende des Kommissionierschachts zu.

Mittels eines solchen ansteigenden oder rampenförmigen Abschnitts der Führungsbahn kann das in Einfahrrichtung vordere Ende der Zunge in einfacher Weise angehoben werden. Dies geschieht einfach dadurch, dass ein vorderes Ende des Rollenwagens oder Schlittens ein Stück weit gegenüber dem hinteren Ende des Rollenwagens oder Schlittens angehoben wird. In gleicher Weise kann zusätzlich oder alternativ selbstverständlich auch das hintere Ende des Rollenwagens oder Schlittens abgesenkt werden. Ein ansteigender oder rampenförmiger Abschnitt der Führungsbahn wird dabei vorteilhafterweise so ausgebildet, dass das vordere Ende der Zunge beim Einfahren erst kurz vor dem Erreichen der vollständig eingefahrenen Position angehoben wird, beispielsweise erst im Verlauf weniger Millimeter vor dem Erreichen der vollständig eingefahrenen Position. Beim Ausfahren der Zunge wird demzufolge die Zunge dann auch wenige Millimeter nach dem Verlassen der vollständig eingefahrenen Position wieder abgesenkt. Dies verhindert, dass das freie Ende der Zunge beim Ausfahren deutlich oberhalb der Oberfläche des Ladegutträgers angeordnet ist. Vielmehr wird erreicht, dass die Unterseite der Zunge nur knapp oberhalb der Oberfläche des Ladegutträgers angeordnet ist oder sogar auf der Oberfläche des Ladegutträgers aufliegt, sobald die vollständig eingefahrene Position der Zunge beim Ausfahren um wenige Millimeter verlassen wurde. Die Ladegutstapel auf der Oberfläche der Zunge können dadurch sicher auf der Oberfläche des Ladegutträgers abgesetzt werden, ohne dass ein Verrutschen der Stapel bzw. der einzelnen Ladegutstücke zu befürchten ist.

In Weiterbildung der Erfindung ist wenigstens ein Sensor zum Erfassen einer Durchbiegung der Zunge beim Beladen vorgesehen und es ist weiter eine Steuereinheit zum Ansteuern der Mittel zum Anheben der Zunge in Abhängigkeit der erfassten Biegung der Zunge vorgesehen.

Beispielsweise kann, je nach Gewicht des aufgesetzten Ladeguts, eine Biegung der Zunge erfasst werden und dementsprechend kann die Zunge angehoben werden, um die Biegung über die Länge der Zunge zu vermitteln oder auszumitteln. Im Rahmen der Erfindung kann eine Biegung der Zunge beim Beladen selbstverständlich auch vollständig kompensiert werden, wenn dies erforderlich ist. Die Erfassung der Biegung kann beispielsweise mittels optischer Sensoren, Dehnungsmessstreifen oder ähnlichem erfolgen.

In Weiterbildung der Erfindung ist eine Steuereinheit vorgesehen, die Mittel zum Vorausberechnen einer Biegung der Zunge in Abhängigkeit eines auf die Zunge zu kommissionierenden Ladeguts aufweist, wobei die Steuereinheit zum Ansteuern der Mittel zum Anheben der Zunge in Abhängigkeit der vorausberechneten Biegung ausgebildet ist.

Üblicherweise werden Ladegutträger, beispielsweise Gitterrollwagen oder Paletten, aus einem teilautomatischen oder vollautomatischen Hochregallager kommissioniert. Der Steuereinheit ist dadurch das Gewicht des zu kommissionierenden Ladeguts aus dem Datensatz des Ladeguts bekannt. Die Steuereinheit kann infolgedessen eine zu erwartende Biegung der Zunge vorausberechnen und die Mittel, also beispielsweise einen Antrieb, zum Anheben der Zunge entsprechend ansteuern, um die Biegung der Zunge über deren Länge zu vermitteln oder auszumitteln oder gegebenenfalls um die Biegung der Zunge beim Beladen vollständig zu kompensieren.

Das der Erfindung zugrunde liegende Problem wird auch durch ein Verfahren zum Kommissionieren von Ladegut gelöst, wobei das Ladegut auf eine in einem Kommissionierschacht angeordnete Zunge kommissioniert wird, die in den Kommissionierschacht einfahrbar und aus dem Kommissionierschacht ausfahrbar ist, und wobei das auf der Zunge befindliche Ladegut beim Ausfahren der Zunge aus dem Kommissionierschacht mittels Abstreifmitteln auf einen Ladegutträger abgestreift wird, bei dem das Anheben eines freien und in Einfahrrichtung vorderen Endes der Zunge in Richtung auf ein oberes Ende des Kommissionierschachts und/oder das Positionieren wenigstens eines Abschnitts der Zunge im vollständig in den Kommissionierschacht eingefahrenen und unbeladenen Zustand schräg in Richtung auf ein oberes Ende des Kommissionierschachts zu vorgesehen ist.

In Weiterbildung der Erfindung ist das Anheben des freien Endes der Zunge mittels Positionieren der Zunge im nicht beladenen und vollständig in den Kommissionierschacht eingefahrenen Zustand vorgesehen, wobei die Zunge so positioniert wird, dass die Zunge in einem Anfangsabschnitt, der beim Einfahren zuletzt im Kommissionierschacht angeordnet wird, schräg zu einer Mittellängsachse des Kommissionierschachts in Richtung auf ein oberes Ende des Kommissionierschachts angeordnet wird.

Gemäß der Erfindung nimmt die Zunge im wenigstens teilweise mit Ladegut beladenen und vollständig in den Kommissionierschacht eingefahrenen Zustand eine bogenartige Form ein, gesehen senkrecht zur Einfahrrichtung und senkrecht zur Mittellängsachse des Kommissionierschachts.

In Weiterbildung der Erfindung liegt ein höchster Punkt der bogenartigen Form der Zunge im Bereich der Mittellängsachse des Kommissionierschachts.

Auf diese Weise lässt sich die Durchbiegung über die Länge der Zunge vermitteln bzw. ausmitteln. Die Zunge senkt sich in diesem Fall an ihrem freien Ende lediglich etwa halb so stark ab wie bei einer horizontalen Ausgangsposition im unbeladenen Zustand.

In Weiterbildung der Erfindung ist die Zunge an einem Rollenwagen oder Schlitten angeordnet, wobei das Führen des Rollenwagens oder des Schlittens an einer Führungsbahn und das Anheben eines ersten Abschnitts der Zunge und/oder das Absenken eines zweiten Abschnitts der Zunge mittels der Führungsbahn beim Einfahren der Zunge in den Kommissionierschacht vorgesehen ist.

In Weiterbildung der Erfindung wird ein in Einfahrrichtung vorderes Ende des Rollenwagens oder des Schlittens beim Einfahren der Zunge in den Kommissionierschacht kurz vor Erreichen des vollständig in den Kommissionierschacht eingefahrenen Zustands angehoben und/oder es wird ein in Einfahrrichtung hinteres Ende des Rollenwagens oder des Schlittens beim Einfahren der Zunge in den Kommissionierschacht kurz vor Erreichen des vollständig in den Kommissionierschacht eingefahrenen Zustands abgesenkt.

Auf diese Weise lässt sich das vordere, freie Ende der Zunge im vollständig eingefahrenen Zustand im unbeladenen Zustand oder im teilweise beladenen Zustand anheben. Beim Beladen der Zunge wird die Biegung der Zunge oder besser die Auslenkung gegenüber der idealen horizontalen Lage der Zunge dann über die Länge der Zunge vermittelt oder ausgemittelt.

In Weiterbildung der Erfindung wird beim Ausfahren der Zunge aus dem Kommissionierschacht ein in Einfahrrichtung vorderes Ende des Rollenwagens oder des Schlittens kurz nach Verlassen des vollständig in den Kommissionierschacht eingefahrenen Zustands abgesenkt und/oder es wird ein in Einfahrrichtung hinteres Ende des Rollenwagens oder des Schlittens beim Ausfahren der Zunge aus dem Kommissionierschacht kurz nach Verlassen des vollständig in den Kommissionierschacht eingefahrenen Zustands angehoben.

In Weiterbildung der Erfindung wird beim Ausfahren der Zunge aus dem Kommissionierschacht der Rollenwagen oder der Schlitten mit Ausnahme eines ersten Wegabschnitts vom vollständig in den Kommissionierschacht eingefahrenen Zustand bis kurz nach Verlassen des vollständig in den Kommissionierschacht eingefahrenen Zustands senkrecht zur Mittellängsachse des Kommissionierschachts bewegt.

Die Zunge wird dadurch in horizontaler Richtung zwischen dem Ladegutstapel und der Oberfläche des Ladegutträgers herausgezogen. Auch das vordere Ende der Zunge ist dann nicht mehr angehoben und das Ladegut wird aus geringer Höhe, idealerweise lediglich aus der, der Dicke der Zunge entsprechenden Höhe, auf die Oberfläche des Ladegutträgers abgelegt. Die Zunge wird bereits beim Ausfahren oder Zurückfahren abgesenkt und somit kann bereits das Ladegut auf dem vorderen Ende der Zunge aus geringerer Höhe auf den Ladegutträger abgelegt oder abgeschoben werden.

In Weiterbildung der Erfindung erfolgt das Anheben des freien und in Einfahrrichtung vorderen Endes der Zunge in Richtung auf ein oberes Ende des Kommissionierschachts erst nach dem Auflegen von Ladegut auf einen Bereich der Zunge, der unmittelbar an das freie Ende der Zunge anschließt.

Beispielsweise erfolgt das vollständige Einfahren der Zunge erst nach dem Ablegen eines Teils des Ladegutsauf die Zunge.

In Weiterbildung der Erfindung erfolgt das Messen einer Biegung der Zunge beim Beladen mit Ladegut und das Anheben des freien und in Einfahrrichtung vorderen Endes der Zunge in Richtung auf ein oberes Ende des Kommissionierschachts zu in Abhängigkeit der gemessenen Biegung.

In Weiterbildung der Erfindung erfolgt das Vorausberechnen einer Biegung der Zunge infolge des Beladens mit Ladegut und das Anheben des freien und in Einfahrrichtung vorderen Endes der Zunge in Richtung auf ein oberes Ende des Kommissionierschachts in Abhängigkeit der Vorausberechnung.

Weitere Merkmale und Vorteile der Erfindung ergeben sich aus den Ansprüchen und der folgenden Beschreibung bevorzugter Ausführungsformen der Erfindung im Zusammenhang mit den Zeichnungen.

In den Zeichnungen zeigen:
- Fig. 1: eine schematische Seitenansicht einer erfindungsgemäßen Vorrichtung zum Kommissionieren,
- Fig. 2: eine Teilschnittansicht einer erfindungsgemäßen Vorrichtung zum Kommissionieren, wobei ein nicht beladener Zustand einer Zunge und ein teilweise beladener Zustand einer Zunge überlagert dargestellt sind,
- Fig. 3: die Einzelheit X aus Fig. 2,
- Fig. 4: die Einzelheit Y aus Fig. 2,
- Fig. 5: eine der Fig. 2 vergleichbare Teilschnittansicht mit der Zunge im unbeladenen Zustand und
- Fig. 6: eine der Fig. 2 vergleichbare Teilschnittansicht im teilweise beladenen Zustand der Zunge.

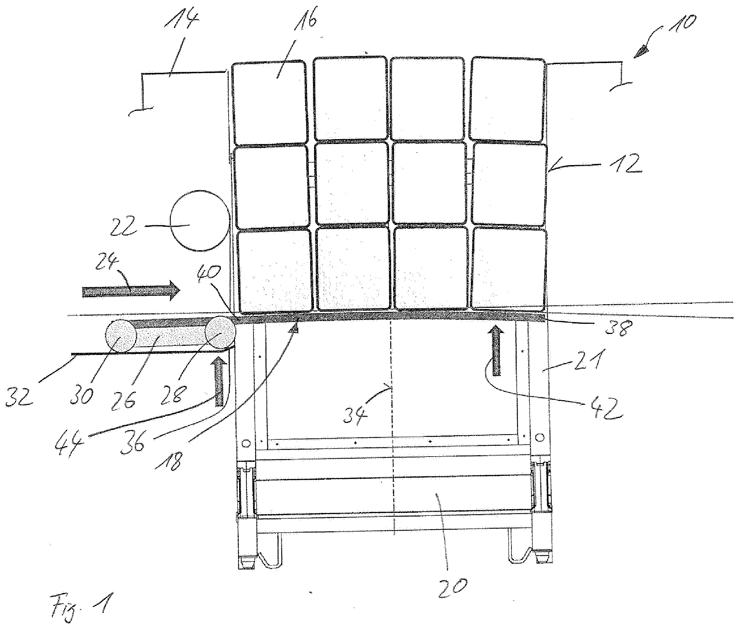

Fig. 1 zeigt schematisch eine Vorrichtung 10 zum Kommissionieren gemäß der Erfindung. Die Vorrichtung 10 ist ähnlich zu der Vorrichtung zum Kommissionieren gemäß der Offenlegungsschrift DE 10 2018 203 336 A1 aufgebaut.

Die Vorrichtung 10 weist einen in Fig. 1 lediglich angedeuteten Kommissionierschacht 12 auf. Der Kommissionierschacht 12 endet an einer in Fig. 1 lediglich schematisch angedeuteten Brüstung 14. Neben der Brüstung 14 auf einer nicht dargestellten Kommissionierbühne steht ein Laderoboter oder ein Bediener, der Ladegutstücke 16 auf eine Zunge 18 kommissioniert, die in Höhenrichtung des Kommissionierschachts 12 verschiebbar ist. In dem in Fig. 1 dargestellten Zustand hat der Bediener oder Kommissionierer bzw. ein Laderoboter bereits drei Schichten oder drei Lagen an Ladegutstücken 16 auf der Zunge 18 abgelegt. Sobald der Ladegutstapel auf der Zunge 18 die vorgesehene Höhe erreicht hat, wird die Zunge 18 bis auf die Höhe der Oberfläche der Ladefläche eines Gitterrollwagens 20 abgesenkt. Zu Fig. 1 ist lediglich eine hinter der Zunge 18 angeordnete Seitenwand 21 des Gitterrollwagens 20 dargestellt, die in Fig. 1 vordere Seitenwand ist nicht dargestellt. Die Zunge 18 wird dann in Fig. 1 nach links unter dem Kommissionierschacht 12 herausgezogen, wobei dadurch dann der Stapel aus Ladegutstücken 16 auf die Ladefläche des Gitterrollwagens 20 abgesetzt wird. Hierzu sind Abstreifmittel vorgesehen, die in Fig. 1 lediglich schematisch in Form eines Rollladens 22 dargestellt sind. Der Rollladen 22 wird beim Absenken der Zunge 18 ausgefahren. Die Zunge wird dann unterhalb des unteren Endes des Rollladens herausgezogen. Der Rollladen 22 verhindert dann, dass die einzelnen Ladegutstücke 16 sich aus dem Kommissionierschacht herausbewegen. Im Rahmen der Erfindung können auch andere Ladegutträger, beispielsweise Paletten, beladen werden.

Die Zunge 18 ist mit ihrem, in Einfahrrichtung 24 hinteren Ende an einem Rollenwagen 26 befestigt. Der Rollenwagen 26 weist ein vorderes Rollenpaar und ein hinteres Rollenpaar auf. Die Rollenpaare sind zu beiden Seiten des Rollenwagens an jeweils einer Führungsbahn 32 geführt. In der Seitenansicht der Fig. 1 ist lediglich eine vordere Rolle des vorderen Rollenpaars 28, eine hintere Rolle des hinteren Rollenpaars 30 sowie eine der Führungsbahnen 32 für die Rollenpaare 28, 30 zu erkennen.

Die Führungsbahn 32 verläuft im Wesentlichen horizontal, also senkrecht zu einer Mittellängsachse 34 des Kommissionierschachts 12. Lediglich in ihrem letzten Abschnitt 36 steigt die Führungsbahn 32 an, so dass der Abschnitt 36 zumindest abschnittsweise rampenförmig ausgebildet ist.

In Fig. 1 ist der vollständig in den Kommissionierschacht 12 eingefahrene Zustand der Zunge 18 dargestellt. Als Kommissionierschacht 12 wird dabei der Raum zwischen den in Fig. 1 erkennbaren Seitenwänden und innerhalb der gedachten Verlängerung der Seitenwände von der Brüstung 14 bis zur Ladefläche des Gitterrollwagens 20 bezeichnet. In diesem vollständig eingefahrenen Zustand ist das in Einfahrrichtung 24 vordere Rollenpaar 28 bereits in den Bereich des rampenförmigen Abschnitts 36 gelangt. Das in Einfahrrichtung 24 vordere Rollenpaar 28 ist dadurch gegenüber dem hinteren Rollenpaar 30 ein Stück weit angehoben. Infolgedessen ist ein Anfangsabschnitt der Zunge 18, der also beim Einfahren zuletzt im Kommissionierschacht 12 angeordnet wird, schräg in Richtung auf das in Fig. 1 obere Ende des Kommissionierschachts 12 zu angeordnet. Dies wird dadurch bewirkt, dass der Rollenwagen 26 ebenfalls schräg und in Richtung auf den Kommissionierschacht 12 zu ansteigend angeordnet ist.

Im unbeladenen Zustand der Zunge 18 wäre diese infolgedessen über ihre gesamte Länge schräg nach oben in Richtung auf das obere Ende des Kommissionierschachts 12 zu im Kommissionierschacht 12 angeordnet. Eine Biegung der Zunge im unbeladenen Zustand ist vernachlässigbar, da eine solche Biegung lediglich durch das Eigengewicht der Zunge 18 verursacht würde.

Im beladenen Zustand der Zunge 18, der in Fig. 1 dargestellt ist, ist das freie und in Einfahrrichtung 24 vordere Ende 38 der Zunge nach unten ausgelenkt und befindet sich lediglich geringfügig unterhalb des in Einfahrrichtung 24 hinteren Endes 40 der Zunge 18. Das hintere Ende 40 der Zunge wird dabei zu Definitionszwecken an der Stelle der Zunge 18 definiert, die im vollständig eingefahrenen Zustand der Zunge 18 gerade noch innerhalb einer gedachten Verlängerung des Kommissionierschachts 12 nach unten angeordnet ist. Die Zunge 18 befindet sich unterhalb des Kommissionierschachts 12.

Wie in Fig. 1 zu erkennen ist, nimmt die Zunge 18 damit zwischen dem in Einfahrrichtung hinteren Ende 40 und dem in Einfahrrichtung vorderen Ende 38 eine bogenartige Form ein. Ein Scheitelpunkt dieser Biegung kann in dem in Fig. 1 dargestellten Zustand etwa in der Mitte des Kommissionierschachts 12, also auf Höhe der Mittellängsachse 34 des Kommissionierschachts 12, liegen. Dies ist im Rahmen der Erfindung aber nicht zwingend notwendig.

Aus Fig. 1 wird dadurch ersichtlich, dass eine Biegung der Zunge 18 im beladenen Zustand oder besser eine Abweichung der Position der Zunge 18 gegenüber einer idealen horizontalen Lage über die im Kommissionierschacht 12 befindliche Länge der Zunge 18 vermittelt oder ausgemittelt wird.

Wie in Fig. 1 dargestellt ist, liegen sämtliche Spalten oder Einzelstapel aus Ladegutstücken 16 damit leicht schräg auf der Zunge 18 auf. Die Abweichung der Spalten an Ladegutstücken 16 von der Vertikalen ist aber bei allen Spalten so gering, dass nicht zu befürchten ist, dass die einzelnen Spalten nicht korrekt auf der Oberfläche der Palette 20 abgesetzt werden.

Wäre die Auslenkung des freien Endes 38 der Zunge 18 nach unten deutlich größer als in dem in Fig. 1 dargestellten Zustand, wäre die Abweichung der in Fig. 1 rechten Spalte an Ladegutstücken von der Vertikalen so groß, dass jedenfalls diese in Fig. 1 rechte Spalte an Ladegutstücken 16 nicht korrekt auf der Oberfläche der Palette 20 abgesetzt werden könnte, wenn die Zunge 18 zwischen dem Stapel an Ladegutstücken 16 und der Oberfläche des Gitterrollwagens 20 herausgezogen wird.

Das Vermitteln oder Ausmitteln der Biegung der Zunge 18 im beladenen Zustand wird infolgedessen durch ein Anheben des freien Endes der Zunge 38 im unbeladenen Zustand gegenüber einer idealen horizontalen Anordnung der Zunge 18 erreicht. Dies ist durch einen Pfeil 42 symbolisiert. Das Anheben des freien Endes 38 der Zunge 18 gemäß dem Pfeil 42 wird wiederum durch das Schrägstellen des Rollenwagens 26 bzw. das Anheben des vorderen Rollenpaars 28 des Rollenwagens 26 erreicht. Dies ist durch einen Pfeil 44 symbolisiert.

Eine Länge des rampenartigen Abschnitts 36 der Führungsbahn 32 beträgt dabei nur wenige Millimeter und beispielsweise lediglich 10 mm. Ein Höhenanstieg im Abschnitt 36 beträgt beispielsweise lediglich wenige Millimeter. Ein solches Anheben des vorderen Rollenpaars 28 des Rollenwagens 26 um wenige Millimeter genügt dabei, um das freie Ende 38 der Zunge 18 um einen ausreichenden Betrag anzuheben, beispielsweise um etwa 35 mm im unbeladenen Zustand. Es wird im Rahmen der Erfindung angestrebt, dass die Zunge 18 im unbeladenen Zustand um einen Winkel von etwa 1° bis 5° schräg nach oben in Richtung auf das obere Ende des Kommissionierschachts 12 zu im Kommissionierschacht 12 angeordnet ist. Im Rahmen der Erfindung kann eine Dimensionierung des rampenartigen Abschnitts 36 sowie auch der Zunge 18 selbst in Abhängigkeit des vorgesehenen Anwendungsfalls erfolgen, also beispielsweise ob sehr schweres Ladegut oder eher leichtes Ladegut kommissioniert werden soll. Die Dimensionierung des rampenartigen Abschnitts 36 kann aber auch so erfolgen, dass abhängig vom vorgesehenen Anwendungsfall die Endposition des Rollwagens so gewählt wird, dass sich die gewünschte Position der Zunge ergibt.

Anhand der Fig. 1 ist zu erkennen, dass beim Ausfahren der Zunge 18 aus dem Kommissionierschacht 12 das vordere Rollenpaar 28 des Rollenwagens 26 nach Verlassen des Abschnitts 36 bereits wieder auf gleicher Höhe mit dem hinteren Rollenpaar 30 angeordnet ist. Die Zunge 18 wird also mit Ausnahme weniger Millimeter oder Zentimeter nach dem Beginn des Ausfahrens in horizontaler Richtung aus dem Kommissionierschacht 12 ausgefahren. Dies ermöglicht das korrekte Absetzen des Stapels an Ladegutstücken 16 auf die Oberfläche der Palette 20.

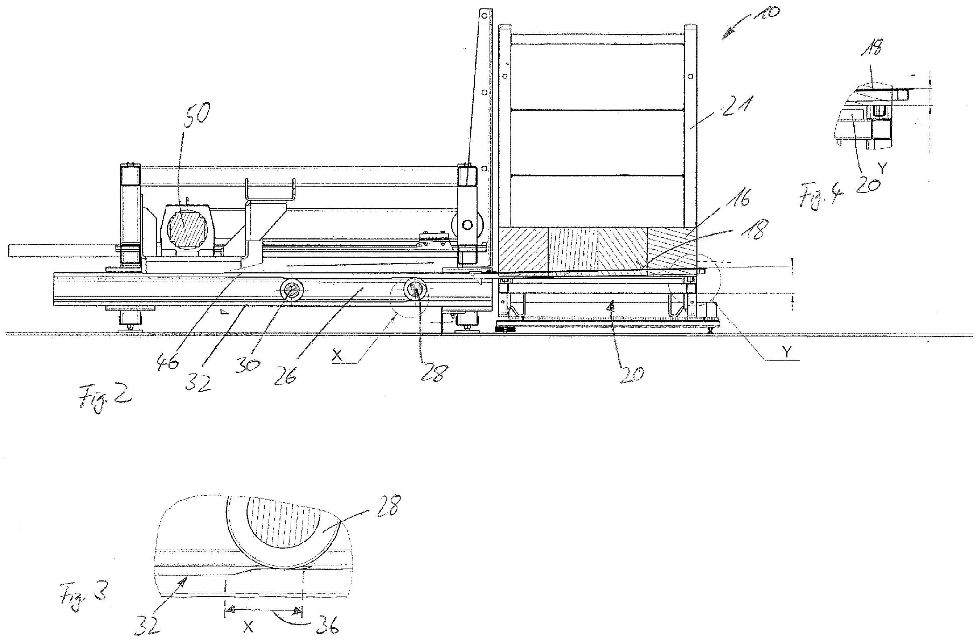

Fig. 2 zeigt eine Teilschnittansicht einer erfindungsgemäßen Vorrichtung zum Kommissionieren 10. Die Zunge 18 ist im vollständig in den Kommissionierschacht 12 eingefahrenen Zustand dargestellt. Fig. 2 zeigt aber den unbeladenen Zustand der Zunge 18 und gleichzeitig den mit mehreren Ladegutstücken 16 beladenen Zustand der Zunge 18 in Überlagerung. Die Zunge 18 ist an dem Rollenwagen 26 befestigt, der ein vorderes Rollenpaar 28 und ein hinteres Rollenpaar 30 aufweist. Die Rollenpaare 28, 30 laufen zu beiden Seiten des Rollenwagens 26 jeweils einer unteren Führungsbahnen 32. Ein Ausweichen der Rollenpaare 28, 30 nach oben wird durch obere Führungsbahnen 46 verhindert. Im dargestellten vollständig eingefahrenen Zustand der Zunge 18 liegt die hintere Rolle oben an der oberen Führungsbahn 46 an. Dadurch wird beim Beladen der Zunge 18 ein Kippen der Zunge 18 nach unten verhindert.

Das vordere Rollenpaar 28 befindet sich im Abschnitt 36 der unteren Führungsbahn 32, wobei dies in Fig. 3 zu erkennen ist. Fig. 3 zeigt die Einzelheit X aus Fig. 2 in vergrößerter Darstellung. Der Abschnitt 36 weist einen ansteigenden, rampenartigen Bereich sowie einen sich an den rampenartigen Bereich anschließenden horizontalen Bereich auf. Im vollständig eingefahrenen Zustand der Zunge 18 liegt das Rollenpaar 28 auf dem horizontalen Bereich auf. Es ist dadurch nicht zu befürchten, dass der Rollenwagen 26 sich während des Beladens selbsttätig den rampenartigen Bereich wieder herunterbewegt. Im Rahmen der Erfindung kann das Rollenpaar 28 aber auch im rampenartigen Bereich angeordnet sein, um mittels einer Position des Rollenpaars 28 innerhalb des rampenartigen Bereichs eine gewünschte Höhe der Zunge einstellen zu können. Der Rollenwagen 26 wird motorisch angetrieben.

Der rampenartige und damit ansteigende Bereich ist beispielsweise lediglich etwa 10 mm lang. Der Bereich 36 insgesamt weist eine deutlich größere Länge auf, beispielsweise 30 mm.

In Fig. 2 ist zu erkennen, dass oberhalb des Bereichs 36 auch die obere Führungsbahn 46 eine Ausbuchtung nach oben aufweist. Die obere Führungsbahn 46 weist oberhalb der hinteren Rolle 30 einen Absatz nach unten auf. Das vordere Rollenpaar 28 und auch das hintere Rollenpaar 30 sind zwischen der unteren Führungsbahn 32 und der oberen Führungsbahn 46 eng geführt, so dass ein Verkippen des Rollenwagens 26 während des Beladens der Zunge 18 ausgeschlossen ist.

Eine Feinpositionierung der Zunge 18 während des Einfahrens in den Kommissionierschacht 12 und auch während des Ausfahrens erfolgt über einen Antriebsmotor 50 des Rollenwagens 26, speziell über einen Encoder des Antriebsmotors 50.

Fig. 4 zeigt die Einzelheit Y aus Fig. 2 in vergrößerter Darstellung. Zu erkennen ist die schräge Anordnung der Zunge 18 im unbeladenen Zustand oberhalb einer Oberfläche einer Palette 20, auf die ein Stapel aus Ladegutstücken 16 abgesetzt werden soll.

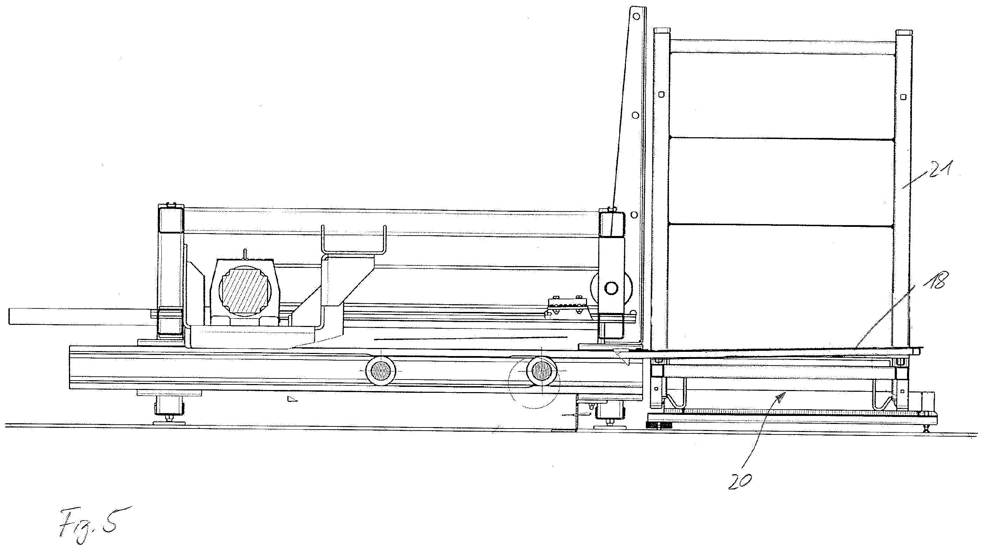

Fig. 5 zeigt eine der Fig. 2 vergleichbare Teilschnittansicht. Zur Verdeutlichung der Darstellung ist die Zunge 18 im unbeladenen Zustand dargestellt. Es ist zu erkennen, dass die Zunge 18 schräg nach oben innerhalb des Kommissionierschachts 12 angeordnet ist. Die Zunge 18 ist dabei bei der dargestellten Ausführungsform um etwa 1,3° schräg nach oben im Kommissionierschacht 12 angeordnet. Erfindungsgemäß soll dieser Winkel, den die Zunge 18 im unbeladenen Zustand innerhalb des Kommissionierschachts 12 einnimmt, zwischen 1° und maximal 5° liegen, insbesondere zwischen 1°und 2°, abhängig unter anderem von Material und Länge der Zunge.

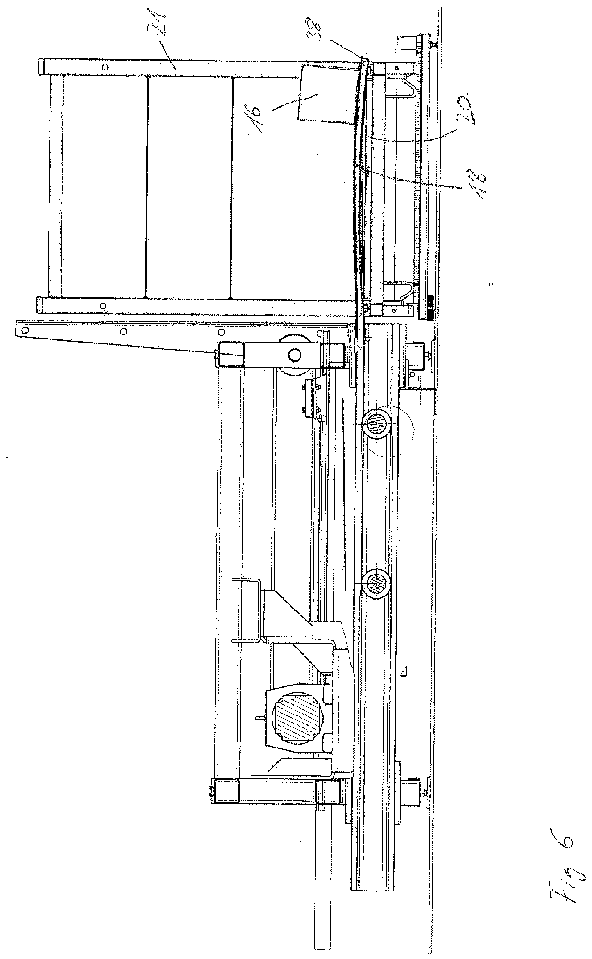

Fig. 6 zeigt eine der Fig. 2 und der Fig. 5 vergleichbare Teilschnittansicht, wobei nun im Bereich des freien Endes 38 der Zunge 18 bereits ein Ladegutstück 16 aufgelegt wurde. Das freie Ende der Zunge 18 hat sich gegenüber dem in Fig. 5 dargestellten unbeladenen Zustand dadurch bereits abgesenkt, so dass der innerhalb des Kommissionierschachts 12 befindliche Teil der Zunge 18 dadurch eine bogenartige Form einnimmt, vgl. Fig. 1. Es ist zu erkennen, dass die Biegung der Zunge 18 beziehungsweise die Auslenkung der Zunge 18 gegenüber einer idealen horizontalen Lage dadurch über die Länge der Zunge 18 vermittelt bzw. ausgemittelt ist. Speziell sitzt das Ladegutstück 16 zwar nun schräg auf der Zunge 18, allerdings ist die Abweichung der Position des Ladegutstücks 16 von der Vertikalen deutlich geringer als wenn die Zunge 18 nicht wie in Fig. 5 gezeigt schräg nach oben im unbeladenen Zustand im Kommissionierschacht 12 angeordnet wäre, sondern horizontal. Auf das in Fig. 6 dargestellte Ladegutstück 16 können nun weitere Ladegutstücke 16 gestapelt werden, vgl. Fig. 1. Der Stapel an Ladegutstücken kann dann problemlos durch Herausziehen der Zunge 18, in Fig. 6 nach links, aus dem Kommissionierschacht 12 auf die Oberfläche der Palette 20 abgesetzt werden. Die einzelnen Ladegutstücke liegen dann innerhalb einer vorgegebenen Toleranz zueinander und auf der Oberfläche der Palette 20 auf. Die Palette 20 ist dadurch sicher geladen und beim weiteren Transport der Palette ist nicht zu befürchten, dass einzelne Ladegutstücke 16 von der Palette 20 herunterfallen.

## Patentansprüche

1. Vorrichtung(10) zum Kommissionieren von Ladegut mit einem Kommissionierschacht, (12) mit einer in den Kommissionierschacht (12) einfahrbaren und aus dem Kommissionierschacht (12) ausfahrbaren Zunge (18) zum Beladen mit Ladegut und mit Abstreifmitteln, die beim Ausfahren der Zunge (18) aus dem Kommissionierschacht (12) Ladegut von der Oberseite der Zunge (18) auf einen Ladegutträger abstreifen, wobei Mittel zum Anheben eines freien, in Einfahrrichtung der Zunge (18) vorderen Endes der Zunge (18) in Richtung auf ein oberes Ende des Kommissionierschachts (12) vorgesehen sind und dass die Zunge (18), im vollständig in den Kommissionierschacht (12) eingefahrenen und unbeladenen Zustand, wenigstens abschnittsweise schräg in Richtung auf ein oberes Ende des Kommissionierschachts (12) zu angeordnet ist, wobei die Mittel zum Anheben eine Führungsbahn (32) aufweisen, wobei die Zunge (18) an einem Rollenwagen (26) befestigt ist, wobei der Rollenwagen (26) beim Einfahren der Zunge (18) in den Kommissionierschacht (12) und beim Ausfahren der Zunge (18) aus dem Kommissionierschacht (12) sich entlang der Führungsbahn (32) bewegt, wobei ein Abschnitt der Führungsbahn (32) schräg zu einer Einfahrrichtung der Zunge (18) und in Richtung auf ein oberes Ende des Kommissionierschachts (12) zu verläuft,
**dadurch gekennzeichnet, dass** die Führungsbahn (32) im Wesentlichen horizontal, also senkrecht zu einer Mittellängsachse (34) des Kommissionierschachts (12) verläuft und lediglich in ihrem letzten Abschnitt (36) ansteigt, so dass der Abschnitt (36) zumindest abschnittsweise rampenförmig ausgebildet ist.

2. Vorrichtung (10) nach Anspruch 1, **dadurch gekennzeichnet, dass** die Mittel zum Anheben eine Einrichtung zum Positionieren wenigstens eines Anfangsabschnitts der Zunge (18), der beim Einfahren zuletzt im Kommissionierschacht (12) angeordnet wird, schräg zu einer Mittellängsachse (34) des Kommissionierschachts (12) in Richtung auf ein oberes Ende des Kommissionierschachts (12) zu im nicht beladenen und vollständig in den Kommissionierschacht (12) eingefahrenen Zustand der Zunge (18) aufweisen.

3. Vorrichtung (10) nach wenigstens einem der vorstehenden Ansprüche, **gekennzeichnet durch** wenigstens einen Sensor zum Erfassen einer Durchbiegung der Zunge (18) beim Beladen und einer Steuereinheit zum Ansteuern der Mittel zum Anheben der Zunge in Abhängigkeit der erfassten Durchbiegung der Zunge (18) und/oder durch eine Steuereinheit, die Mittel zum Vorausberechnen einer Durchbiegung der Zunge (18) in Abhängigkeit eines auf die Zunge zu kommissionierenden Ladeguts aufweist, wobei die Steuereinheit zum Ansteuern der Mittel zum Anheben der Zunge (18) in Abhängigkeit der vorausberechneten Durchbiegung ausgebildet ist.

4. Verfahren zum Kommissionieren von Ladegut, wobei das Ladegut auf eine in einem Kommissionierschacht (12) angeordnete Zunge (18) kommissioniert wird, die in den Kommissionierschacht (12) einfahrbar und aus dem Kommissionierschacht (12) ausfahrbar ist, und wobei das auf der Zunge (18) befindliche Ladegut beim Ausfahren der Zunge (18) aus dem Kommissionierschacht (12) mittels Abstreifmitteln auf einen Ladegutträger abgestreift wird, wobei Anheben eines freien und in Einfahrrichtung vorderen Endes der Zunge (18) in Richtung auf eine oberes Ende des Kommissionierschachts (12) und/oder Positionieren wenigstens eines Abschnitts der Zunge (18) im vollständig in den Kommissionierschacht (12) eingefahrenen und unbeladenen Zustand schräg in Richtung auf ein oberes Ende des Kommissionierschachts (12) zu vorgesehen ist,
**dadurch gekennzeichnet, dass** im wenigstens teilweise mit Ladegut beladenen und vollständig in den Kommissionierschacht (12) eingefahrenen Zustand die Zunge (18) eine bogenartige Form einnimmt, gesehen senkrecht zur Einfahrrichtung und senkrecht zur Mittellängsachse (34) des Kommissionierschachts (12).

5. Verfahren nach Anspruch 4, **gekennzeichnet durch** Anheben des freien Endes der Zunge (18) mittels Positionierens der Zunge (18) im nicht beladenen und vollständig in den Kommissionierschacht eingefahrenen Zustand so, dass die Zunge (18) in einem Anfangsabschnitt, der beim Einfahren zuletzt im Kommissionierschacht (12) angeordnet wird, schräg zu einer Mittellängsachse (34) des Kommissionierschachts (12) in Richtung auf ein oberes Ende des Kommissionierschachts (12) angeordnet wird.

6. Verfahren nach einem der Ansprüche 4 bis 5, wobei die Zunge (18) an einem Rollenwagen (26) oder Schlitten angeordnet ist, **gekennzeichnet durch** Führen des Rollenwagens (26) oder des Schlittens an einer Führungsbahn (32) und Anheben eines ersten Abschnitts der Zunge (18) und/oder Absenken eines zweiten Abschnitts der Zunge (18) mittels der Führungsbahn (32) beim Einfahren der Zunge (18) in den Kommissionierschacht (12).

7. Verfahren nach Anspruch 6, wobei ein in Einfahrrichtung vorderes Ende des Rollenwagens (26) oder des Schlittens beim Einfahren der Zunge (18) in den Kommissionierschacht (12) kurz vor Erreichen des vollständig in den Kommissionierschacht (12) eingefahrenen Zustands angehoben wird und/oder ein in Einfahrrichtung hinteres Ende des Rollenwagens (26) oder des Schlittens beim Einfahren der Zunge (18) in den Kommissionierschacht (12) kurz vor Erreichen des vollständig in den Kommissionierschacht (12) eingefahrenen Zustands abgesenkt wird.

8. Verfahren nach Anspruch 6 oder 7, wobei beim Ausfahren der Zunge (18) aus dem Kommissionierschacht (12) ein in Einfahrrichtung vorderes Ende des Rollenwagens (26) oder des Schlittens kurz nach Verlassen des vollständig in den Kommissionierschacht (12) eingefahrenen Zustands abgesenkt wird und/oder ein in Einfahrrichtung hinteres Ende des Rollenwagens (26) oder des Schlittens beim Ausfahren der Zunge (18) aus dem Kommissionierschacht (12) kurz nach Verlassen des vollständig in den Kommissionierschacht (12) eingefahrenen Zustands angehoben wird.

9. Verfahren nach Anspruch 7 oder 8, wobei beim Ausfahren der Zunge (18) aus dem Kommissionierschacht (12) der Rollenwagen (26) oder der Schlitten mit Ausnahme eines ersten Wegabschnitts vom vollständig in den Kommissionierschacht (12) eingefahrenen Zustand bis kurz nach Verlassen des vollständig in den Kommissionierschacht (12) eingefahrenen Zustands senkrecht zur Mittellängsachse (34) des Kommissionierschachts (12) bewegt wird.

10. Verfahren nach wenigstens einem der Ansprüche 4 bis 9, wobei das Anheben des freien und in Einfahrrichtung vorderen Endes der Zunge (18) in Richtung auf ein oberes Ende des Kommissionierschachts (12) zuerst nach dem Auflegen von Ladegut auf einen Bereich der Zunge (18) erfolgt, der unmittelbar an das freie Ende der Zunge (18) anschließt.

11. Verfahren nach wenigstens einem der Ansprüche 4 bis 10, **gekennzeichnet durch** Messen einer Biegung der Zunge (18) beim Beladen mit Ladegut und Anheben des freien und in Einfahrrichtung vorderen Endes der Zunge (18) in Richtung auf ein oberes Ende des Kommissionierschachts (12) zu in Abhängigkeit der gemessenen Biegung.

12. Verfahren nach wenigstens einem der Ansprüche 4 bis 11, **gekennzeichnet durch** Vorausberechnen einer Biegung der Zunge (18) in Folge des Beladens mit Ladegut und Anheben des freien und in Einfahrrichtung vorderen Endes der Zunge (18) in Richtung auf ein oberes Ende des Kommissionierschachts (12) in Abhängigkeit der Vorausberechnung.

## Claims

1. Apparatus (10) for picking load goods, comprising a picking chute (12), comprising a tongue (18), which can be moved into the picking chute (12) and can be moved out of the picking chute (12), for loading with load goods, and comprising wipe-off means which, as the tongue (18) is moved out of the picking chute (12), wipe load goods from the top side of the tongue (18) onto a load goods carrier, wherein means for lifting a free end of the tongue (18), that is at the front in the moving in direction of the tongue (18), in the direction of an upper end of the picking chute (12) are provided and wherein the tongue (18), in the state in which it is fully moved into the picking chute (12) and is not loaded, is arranged obliquely at least in sections in the direction of an upper end of the picking chute (12), wherein the means for lifting have a guide track (32), wherein the tongue (18) is fastened to a roller carriage (26), wherein the roller carriage (26) moves along the guide track (32) as the tongue (18) is moved into the picking chute (12) and as the tongue (18) is moved out of the picking chute (12), wherein a portion of the guide track (32) runs obliquely to a moving in direction of the tongue (18) and in the direction of an upper end of the picking chute (12),
**characterized in that** the guide track (32) runs substantially horizontally, that is to say perpendicularly to a central longitudinal axis (34) of the picking chute (12), and only rises in its last portion (36), so that the portion (36) is of ramp-like design at least in sections.

2. Apparatus (10) according to Claim 1, **characterized in that** the means for lifting have a device for positioning at least one initial portion of the tongue (18), which initial portion is arranged last in the picking chute (12) during moving in, obliquely to a central longitudinal axis (34) of the picking chute (12) in the direction of an upper end of the picking chute (12) in the state of the tongue (18) in which it is not loaded and is fully moved into the picking chute (12).

3. Apparatus (10) according to at least one of the preceding claims, **characterized by** at least one sensor for detecting a deflection of the tongue (18) during loading and a control unit for controlling the means for lifting the tongue depending on the detected deflection of the tongue (18) and/or by a control unit which has means for predicting a deflection of the tongue (18) depending on a load good to be picked onto the tongue, wherein the control unit is designed to control the means for lifting the tongue (18) depending on the predicted deflection.

4. Method for picking load goods, wherein the load goods are picked onto a tongue (18) which is arranged in a picking chute (12) and can be moved into the picking chute (12) and moved out of the picking chute (12), and wherein the load goods located on the tongue (18) are wiped off onto a load goods carrier by means of wiping means as the tongue (18) is moved out of the picking chute (12), wherein lifting a free end of the tongue (18) that is at the front in the moving in direction in the direction of an upper end of the picking chute (12) and/or positioning at least one portion of the tongue (18) obliquely in the direction of an upper end of the picking chute (12) in the state in which it is fully moved into the picking chute (12) and is not loaded are provided, **characterized in that**, in the state in which it is at least partially loaded with load goods and is fully moved into the picking chute (12), the tongue (18) assumes an arc-like shape, as seen perpendicularly to the moving in direction and perpendicularly to the central longitudinal axis (34) of the picking chute (12).

5. Method according to Claim 4, **characterized by** lifting the free end of the tongue (18) by means of positioning the tongue (18), in the state in which it is not loaded and is fully moved into the picking chute, such that the tongue (18), in an initial portion which is arranged last in the picking chute (12) during moving in, is arranged obliquely to a central longitudinal axis (34) of the picking chute (12) in the direction of an upper end of the picking chute (12).

6. Method according to either of Claims 4 and 5, wherein the tongue (18) is arranged on a roller carriage (26) or slide, **characterized by** guiding the roller carriage (26) or the slide on a guide track (32) and lifting a first portion of the tongue (18) and/or lowering a second portion of the tongue (18) by means of the guide track (32) as the tongue (18) is moved into the picking chute (12).

7. Method according to Claim 6, wherein an end of the roller carriage (26) or of the slide that is at the front in the moving in direction is lifted shortly before the state of being fully moved into the picking chute (12) is reached as the tongue (18) is moved into the picking chute (12) and/or an end of the roller carriage (26) or of the slide that is at the rear in the retraction direction is lowered shortly before the state of being fully moved into the picking chute (12) is reached as the tongue (18) is moved into the picking chute (12).

8. Method according to Claim 6 or 7, wherein an end of the roller carriage (26) or of the slide that is at the front in the moving in direction is lowered shortly after the state of being fully moved into the picking chute (12) is left as the tongue (18) is moved out of the picking chute (12) and/or an end of the roller carriage (26) or of the slide that is at the rear in the moving in direction is raised shortly after the state of being fully moved into the picking chute (12) is left as the tongue (18) is moved out of the picking chute (12).

9. Method according to Claim 7 or 8, wherein, as the tongue (18) is moved out of the picking chute (12), the roller carriage (26) or the slide is moved perpendicularly to the central longitudinal axis (34) of the picking chute (12) with the exception of a first travel portion from the state of being fully moved into the picking chute (12) until shortly after the state of being fully moved into the picking chute (12) is left.

10. Method according to at least one of Claims 4 to 9, wherein the free end of the tongue (18) that is at the front in the moving in direction is lifted in the direction of an upper end of the picking chute (12) only after load goods are placed on a region of the tongue (18) that directly adjoins the free end of the tongue (18).

11. Method according to at least one of Claims 4 to 10, **characterized by** measuring a bend in the tongue (18) when the tongue is loaded with load goods and lifting the free end of the tongue (18) that is at the front in the moving in direction in the direction of an upper end of the picking chute (12) depending on the measured bend.

12. Method according to at least one of Claims 4 to 11, **characterized by** predicting a bend in the tongue (18) as a result of loading with load goods and lifting the free end of the tongue (18) that is at the front in the moving in direction in the direction of an upper end of the picking chute (12) depending on the prediction.

## Revendications

1. Dispositif (10) pour la préparation de commandes de marchandises, comprenant un compartiment (12) de préparation de commandes, une lame (18) apte à être introduite dans le compartiment (12) de préparation de commandes et à en être sortie pour le chargement de marchandises, et des moyens de raclage qui, lors de la sortie de la lame (18) hors du compartiment (12) de préparation de commandes, raclent les marchandises de la face supérieure de la lame (18) sur un support de marchandises, des moyens étant prévus pour soulever une extrémité libre de la lame (18), située à l'avant dans le sens d'introduction de la lame (18), en direction d'une extrémité supérieure du compartiment (12) de préparation de commandes, et la lame (18), à l'état complètement rentré dans le compartiment (12) de préparation de commandes et non chargé, étant disposée au moins partiellement en oblique en direction d'une extrémité supérieure du compartiment (12) de préparation de commandes, les moyens de soulèvement présentant une glissière de guidage (32), la lame (18) étant fixée à un chariot à galets (26), le chariot à galets (26) se déplaçant le long de la glissière de guidage (32) lors de l'introduction de la lame (18) dans le compartiment (12) de préparation de commandes et, lors de la sortie de la lame (18) hors du compartiment (12) de préparation de commandes, une partie de la glissière de guidage (32) s'étendant en oblique par rapport à une direction d'introduction de la lame (18) et en direction d'une extrémité supérieure du compartiment (12) de préparation de commandes,
**caractérisé en ce que** la glissière de guidage (32) s'étend essentiellement horizontalement, c'est-à-dire perpendiculairement à un axe longitudinal central (34) du compartiment (12) de préparation de commandes et monte uniquement dans sa dernière portion (36), de sorte que la portion (36) est réalisée au moins partiellement en forme de rampe.

2. Dispositif (10) selon la revendication 1, **caractérisé en ce que** les moyens de soulèvement comprennent un dispositif pour positionner au moins une partie initiale de la lame (18), qui est placée en dernier dans le compartiment (12) de préparation de commandes lors de l'insertion, en oblique par rapport à un axe longitudinal médian (34) du compartiment (12) de préparation de commandes, en direction d'une extrémité supérieure du compartiment (12) de préparation de commandes lorsque la lame (18) n'est pas chargée et qu'elle est complètement rentrée dans le compartiment (12) de préparation de commandes.

3. Dispositif (10) selon au moins une des revendications précédentes, **caractérisé par** au moins un capteur pour détecter une flexion de la lame (18) lors du chargement et une unité de commande pour commander les moyens de soulèvement de la lame en fonction de la flexion détectée de la lame (18) et/ou par une unité de commande qui comprend des moyens pour calculer à l'avance une flexion de la lame (18) en fonction d'une marchandise à prélever sur la lame, l'unité de commande étant conçue pour commander les moyens de soulèvement de la lame (18) en fonction de la flexion calculée à l'avance.

4. Procédé de préparation de commandes de marchandises, dans lequel la marchandise est préparée sur une lame (18) placée dans un compartiment (12) de préparation de commandes, qui est apte à être introduite dans le compartiment (12) de préparation de commandes et à en être sortie, et dans lequel la marchandise se trouvant sur la lame (18) est raclée sur un support de marchandises par des moyens de raclage lors de la sortie de la lame (18) hors du compartiment (12) de préparation de commandes, le soulèvement d'une extrémité libre de la lame (18), située en avant dans le sens d'introduction de la lame (18), dans la direction d'une extrémité supérieure du compartiment (12) de préparation de commandes et/ou le positionnement d'au moins une partie de la lame (18), à l'état complètement rentré dans le compartiment (12) de préparation de commandes et non chargé, étant prévu en oblique vers une extrémité supérieure du compartiment (12) de préparation de commandes,
**caractérisé en ce que**, lorsqu'elle est au moins partiellement chargée et complètement rentrée dans le compartiment (12) de préparation de commandes, la lame (18) prend une forme arquée, vue perpendiculairement à la direction d'insertion et perpendiculairement à l'axe longitudinal central (34) du compartiment (12) de préparation de commandes.

5. Procédé selon la revendication 4, **caractérisé par** le fait de soulever l'extrémité libre de la lame (18) en positionnant la lame (18), à l'état non chargé et complètement rentré dans le compartiment de préparation de commandes, de telle sorte que la lame (18) soit placée, dans une partie initiale qui est agencée en dernier dans le compartiment (12) de préparation de commandes lors de l'insertion, en oblique par rapport à un axe longitudinal médian (34) du compartiment (12) de préparation de commandes en direction d'une extrémité supérieure du compartiment (12) de préparation de commandes.

6. Procédé selon l'une des revendications 4 à 5, dans lequel la lame (18) est agencée sur un chariot à galets (26) ou un coulisseau, **caractérisé par le fait que** le chariot à galets (26) ou le coulisseau est guidé sur une glissière de guidage (32) et qu'une première partie de la lame (18) est soulevée et/ou une deuxième partie de la lame (18) est abaissée au moyen de la glissière de guidage (32) lorsque la lame (18) pénètre dans le compartiment (12) de préparation de commandes.

7. Procédé selon la revendication 6, dans lequel une extrémité avant du chariot à galets (26) ou du coulisseau dans le sens d'introduction est soulevée lorsque la lame (18) entre dans le compartiment (12) de préparation de commandes juste avant d'atteindre l'état complètement rentré dans le compartiment (12) de préparation de commandes et/ou une extrémité arrière du chariot à galets (26) ou du coulisseau dans le sens d'introduction est abaissée lorsque la lame (18) pénètre dans le compartiment (12) de préparation de commandes juste avant d'attendre l'état complètement rentré dans le compartiment (12) de préparation de commandes.

8. Procédé selon la revendication 6 ou la revendication 7, dans lequel, lors de la sortie de la lame (18) hors du compartiment (12) de préparation de commandes, une extrémité avant, dans le sens de l'introduction, du chariot à galets (26) ou du coulisseau est abaissée peu après avoir quitté l'état complètement rentré dans le compartiment (12) de préparation de commandes et/ou une extrémité arrière, dans le sens de l'introduction, du chariot à galets (26) ou du coulisseau est soulevée lors de la sortie de la lame (18) hors du compartiment (12) de préparation de commandes peu après avoir quitté l'état complètement rentré dans le compartiment (12) de préparation de commandes.

9. Procédé selon la revendication 7 ou la revendication 8, dans lequel, lors de la sortie de la lame (18) hors du compartiment (12) de préparation de commandes, le chariot à galets (26) ou le coulisseau est déplacé perpendiculairement à l'axe longitudinal médian (34) du compartiment (12) de préparation de commandes, à l'exception d'une première portion du trajet, de l'état complètement rentré dans le compartiment (12) de préparation de commandes jusqu'à peu après avoir quitté l'état complètement rentré dans le compartiment (12) de préparation de commandes.

10. Procédé selon au moins une des revendications 4 à 9, dans lequel le soulèvement de l'extrémité libre de la lame (18), située en avant dans le sens de l'introduction, vers une extrémité supérieure du compartiment (12) de préparation de commandes s'effectue d'abord après la dépose de la marchandise sur une zone de la lame (18) qui est directement adjacente à l'extrémité libre de la lame (18).

11. Procédé selon au moins une des revendications 4 à 10, **caractérisé par** la mesure d'une flexion de la lame (18) lors du chargement de la marchandise et du soulèvement de l'extrémité libre de la lame (18), située en avant dans le sens de l'introduction, en direction d'une extrémité supérieure du compartiment (12) de préparation de commandes en fonction de la flexion mesurée.

12. Procédé selon au moins une des revendications 4 à 11, **caractérisé par** le fait de calculer préalablement une flexion de la lame (18) suite au chargement de la marchandise et le fait de soulever l'extrémité libre de la lame (18), située en avant dans le sens de l'introduction, en direction d'une extrémité supérieure du compartiment (12) de préparation de commandes en fonction du calcul préalable.
